# EUROPÄISCHE PATENTANMELDUNG

(11) **EP 1 236 987 A2**
(43) Veröffentlichungstag der Anmeldung: **04.09.2002**
(21) Anmeldenummer: 02002266.1
(22) Anmeldetag: 30.01.2002
(51) Int. Cl.: G01M 17/007

(54) **Abschussvorrichtung zum Beschleunigen eines Prüfkörpers**

(30) Priorität: 31.01.2001 DE 10104192
(71) Anmelder: Deutscher, Erwin, 8181 St. Ruprecht/Raab (AT)
(72) Erfinder: Deutscher, Erwin, 8181 St. Ruprecht/Raab (AT); Geir, Armin, 8010 Graz (AT)
(74) Vertreter: Manitz, Finsterwald & Partner GbR

(57) **Zusammenfassung**

Die Erfindung betrifft eine Abschußvorrichtung zum Beschleunigen eines Prüfkörpers in Richtung eines zu prüfenden Gegenstandes, insbesondere zum Prüfen von Fahrzeugen, mit einer Halterung für den Prüfkörper und einem beschleunigbaren Träger für die Halterung, wobei der Träger wahlweise entweder in einem Freiflugmodus oder in einem Führungsmodus betreibbar ist, und wobei zumindest ein die Halterung tragender Teil des beschleunigten Trägers im Führungsmodus bis zum Aufprall des Prüfkörpers am Gegenstand bewegbar und im Freiflugmodus vor dem Aufprall abbremsbar ist.

## Beschreibung

Die Erfindung betrifft eine Abschussvorrichtung zum Beschleunigen eines Prüfkörpers in Richtung eines zu prüfenden Gegenstandes, insbesondere zum Prüfen von Fahrzeugen.

Derartige Abschussvorrichtungen werden beispielsweise eingesetzt, um zu untersuchen, welche Auswirkungen Fahrzeuginnenausstattungen bei einem Unfall auf die Fahrzeuginsassen haben. Hierzu wird z.B. in der Praxis ein mit Beschleunigungssensoren versehener Prüfkörper in Form eines Körperteilmodells, insbesondere eines Kopfmodells, unter vorgegebenen Bedingungen gegen zu überprüfende Teile der Innenausstattung geschossen, z.B. gegen Verkleidungen von Rahmenbauteilen. Durch diese Simulation eines Aufpralles des betreffenden Körperteils können Fahrzeuginnenausstattungen daraufhin überprüft werden, ob sie hinsichtlich der an diesem Körperteil eines Fahrzeuginsassen wirksamen Beschleunigungen bestimmten Kriterien entsprechen, die in staatlichen Vorschriften niedergelegt sind und von den Fahrzeugherstellern eingehalten werden müssen. Existierende Vorschriften stellen hohe Anforderungen an die Genauigkeit und Reproduzierbarkeit der Prüfvorgänge.

Eine Prüfvorrichtung mit einer Abschusseinrichtung zur Prüfung von Fahrzeuginnenausstattungen mit einem Kopfmodell ist in der unveröffentlichten deutschen Patentanmeldung 10029045 mit dem Anmeldetag 13. Juni 2000 beschrieben.

Es besteht ein zunehmendes Interesse, nicht nur Innenausstattungen des Fahrzeugs zu überprüfen, sondern mit dem Ziel einer Verbesserung der Fußgängersicherheit von Fahrzeugen deren äußeren Aufbau daraufhin zu untersuchen, ob er existierenden oder zukünftigen Vorschriften genügt.

Die Fahrzeugprüfung wird dadurch aufwendig, dass die einschlägigen Vorschriften die Prüfung mit verschiedenen Prüfkörpern und unterschiedlichen Prüfbedingungen fordern. Im Extremfall ist für jedes geforderte Prüfszenario eine separate, entsprechend angepasste Abschussvorrichtung erforderlich, was zu unverhältnismäßig hohen Kosten für die Fahrzeugprüfung führt.

Es ist das der Erfindung zugrunde liegende Problem (Aufgabe), eine Abschussvorrichtung der eingangs genannten Art zu schaffen, die möglichst vielseitig einsetzbar ist und es insbesondere gestattet, verschiedene Prüfkörper jeweils mit möglichst hoher Genauigkeit insbesondere hinsichtlich Abschussrichtung, Auftreffpunkt, Auftreffgeschwindigkeit und Reproduzierbarkeit zu beschleunigen, wobei die Abschussvorrichtung insbesondere eine hohe Betriebssicherheit sowie einen hohen Bedienkomfort aufweisen soll.

Die Lösung dieser Aufgabe erfolgt durch die Merkmale des Anspruchs 1 und insbesondere dadurch, dass eine Halterung für den Prüfkörper und ein beschleunigbarer Träger für die Halterung vorgesehen sind, wobei der Träger wahlweise entweder in einem Freiflugmodus oder in einem Führungsmodus betreibbar ist, und wobei zumindest ein die Halterung tragender Teil des beschleunigten Trägers im Führungsmodus bis zum Aufprall des Prüfkörpers am Gegenstand bewegbar und im Freiflugmodus vor dem Aufprall abbremsbar ist.

Erfindungsgemäß ist der Träger und damit die Abschussvorrichtung wahlweise entweder in einem Freiflugmodus oder in einem Führungsmodus betreibbar. Im Führungsmodus wird bei entsprechender Positionierung der Abschussvorrichtung relativ zum zu prüfenden Gegenstand durch die Bewegung zumindest des die Halterung tragenden Teils des Trägers erreicht, dass der Prüfkörper während der gesamten Abschussbewegung mit der Halterung gekoppelt bleibt. Hierdurch wird der abgeschossene Prüfkörper auf definierte Weise geführt, so dass entsprechenden Vorschriften Genüge getan wird, nach denen Prüfvorgänge mit frei fliegenden Prüfkörpern unzulässig sind.

Insbesondere solchen Vorschriften, die fordern, dass der Prüfkörper vor dem Auftreffen auf den zu prüfenden Gegenstand keine Rotationsbewegungen ausführen darf, kann im Führungsmodus der erfindungsgemäßen Abschussvorrichtung entsprochen werden. Hierzu ist es bevorzugt, wenn gemäß einer praktischen Ausgestaltung der Erfindung der Träger als Verdrehsicherung für die Halterung ausgebildet ist.

Im Freiflugmodus der erfindungsgemäßen Abschussvorrichtung wird nach dem Gewehrprinzip mit einem frei fliegenden Prüfkörper gearbeitet, der aufgrund seiner Trägheit in den Freiflug übergeht, sobald die Abschußgeschwindigkeit der Halterung durch das Abbremsen des die Halterung tragenden Teils des Trägers abnimmt. Mit dem Freiflugmodus kann folglich solchen Vorschriften entsprochen werden, nach denen den Prüfkörper frei fliegend am zu prüfenden Gegenstand aufschlagen muß.

Im Hinblick auf die Überprüfung von Fahrzeugen auf ausreichende Fußgängersicherheit wird eine Prüfung mit zwei verschiedenen Prüfkörpern gefordert. Hierbei ist zum einen ein auch als "upper leg form" bezeichneter, vergleichsweise schwerer und ein Gewicht von z.B. bis zu 17 kg aufweisender Prüfkörper so zu verschießen, daß er mit einer Geschwindigkeit von bis zu etwa 40 km/h am zu prüfenden Fahrzeug aufschlägt, wobei vor dem Aufprall jedoch keinerlei Rotationsbewegungen des Prüfkörpers auftreten dürfen. Dieser Teil der Prüfung kann mit der erfindungsgemäßen Abschußvorrichtung im Führungsmodus durchgeführt werden. Zum anderen muß in einem weiteren Teil der Prüfung ein auch als "leg form" bezeichneter Prüfkörper frei fliegend am zu prüfenden Fahrzeug aufschlagen. Dieser Prüfungsteil kann mit der erfindungsgemäßen Abschußvorrichtung im Freiflugmodus durchgeführt werden.

Die erfindungsgemäße Abschußvorrichtung ist somit vielseitig einsetzbar, wobei Kosten und Aufwand für eine einschlägigen Vorschriften entsprechende Prüfung insbesondere von Fahrzeugen hinsichtlich ihrer Fußgängersicherheit erheblich reduziert werden können.

Die Abschußvorrichtung und insbesondere der Träger für die Prüfkörper-Halterung ist vorzugsweise derart ausgebildet, daß zumindest ein die Halterung tragender Teil des Trägers spätestens zum Zeitpunkt des Aufpralls des Prüfkörpers am Gegenstand zumindest in Abschußrichtung frei beweglich geführt ist.

Diese Ausgestaltung stellt sicher, daß im Führungsmodus nach dem Aufprall des Prüfkörpers am zu prüfenden Gegenstand der Prüfkörper unter Zurückbewegung der Halterung abprallen kann. Insbesondere ist hierdurch ein freies Nachschwingen des Prüfkörpers nach dem Aufprall möglich.

Vorzugsweise ist nach dem Abbremsen zumindest eines Teils des zuvor beschleunigten Trägers dessen die Halterung tragender Teil im Führungsmodus trägheitsbedingt weiter bewegbar und im Freiflugmodus am abgebremsten Teil festgehalten.

Bevorzugt ist es ferner, wenn im Führungsmodus die Halterung trägheitsbedingt unter Verlängerung des Trägers weiter bewegbar und im Freiflugmodus der Träger zumindest im wesentlichen unverlängerbar ist.

Die Verlängerbarkeit des Trägers wird in einer bevorzugten praktischen Ausgestaltung der Erfindung dadurch erreicht, dass der Träger mehrteilig ausgebildet ist und zumindest in Abschussrichtung relativ zueinander bewegbare Teilträger umfasst. Im Führungsmodus kann sich somit nach dem Abbremsen eines Teilträgers zumindest ein weiterer Teilträger trägheitsbedingt weiter bewegen, während im Freiflugmodus die Relativbewegbarkeit der Teilträger reduziert oder blockiert ist.

Vorzugsweise ist der Träger als Traggestänge ausgebildet. Der Träger kann dabei teleskopartig gekoppelte Teilträger umfassen. Auf diese Weise wird ein durch Massenträgheit ausziehbarer Träger für die Prüfkörper-Halterung geschaffen. Besonders bevorzugt ist es, wenn der Träger ineinander gesteckte Tragrohre umfasst. Hierbei kann zwischen den Teilträgern bzw. zwischen zumindest einem Innenrohr und wenigstens einem Außenrohr eine z.B. von speziellen Gleitringen gebildete Gleitlagerung vorgesehen sein. Auf diese Weise können die im Führungsmodus von dem sich trägheitsbedingt weiterbewegenden Teilträger bzw. Tragrohr zu überwindenden Reibungskräfte minimiert werden.

In einer besonders bevorzugten praktischen Ausführung der Erfindung ist der Träger mit einem Kolben einer Kolben-/Zylinderanordnung gekoppelt, wobei der Kolben in einem Zylinder beweglich geführt und insbesondere mittels Gasdruck beschleunigbar ist.

Eine besonders vorteilhafte Verdrehsicherung für die Halterung, die eine rotationsfreie Abschussbewegung des Prüfkörpers gewährleistet, wird gemäß einer bevorzugten Ausgestaltung der Erfindung dadurch erzielt, dass die Halterung mit wenigstens zwei beabstandeten und insbesondere . diametral einander gegenüberliegenden Einzelträgern gekoppelt ist. Hierbei kann der Träger beispielsweise zwei baugleich ausgeführte Einzelträger aufweisen, die jeweils teleskopartig gekoppelte Teilträger oder ineinandergesteckte Tragrohre umfassen.

Des weiteren wird vorgeschlagen, dass eine Arretierung zum Halten des insbesondere vorgespannten Trägers bzw. Kolbens wenigstens einen verschwenkbaren Haltearm umfasst, der in einer Verriegelungsstellung mit einem klauenartigen Eingriffsende einen Verriegelungsabschnitt des Trägers bzw. Kolbens umgreift.

Beim Vorsehen einer Kolben-/Zylinderanordnung zur Beschleunigung des Trägers erfolgt das Vorspannen des Kolbens vorzugsweise durch Einbringen von Druckgas in einen hinteren Druckraum des Zylinders, der von einer Rückseite des Kolbens begrenzt ist. Die Arretierung gewährleistet einen ausreichend großen Druckaufbau, und durch Verschwenken des Haltearms kann die Arretierung gelöst werden.

In einer hinsichtlich des Lösens der Arretierung besonders vorteilhaften Ausgestaltung der Erfindung umfasst das Eingriffsende des Haltearms einen Abroller, der vorzugsweise als Wälzlager ausgebildet ist. Hierdurch ist die Lösebewegung des Haltearms eine besonders leichtgängige Abrollbewegung.

Gemäß einer alternativen Ausführungsform der Erfindung ist anstelle eines verschwenkbaren Haltearmes hinter dem Kolben ein Arbeitsraum vorgesehen, der durch eine Trennwand in einen vorderen, von der Rückseite des Kolbens begrenzten Beschleunigungsraum und einen hinteren, dem Beschleunigungsraum vorgelagerten Druckraum unterteilt ist. In der Trennwand ist wenigstens eine Beschleunigungsöffnung ausgebildet, die durch eine ansteuerbare Verschlusseinrichtung wahlweise geschlossen oder freigegeben werden kann. Die Verschlusseinrichtung ist vorzugsweise als Ventil, insbesondere als Tellerventil, ausgebildet. Zu Beginn der Abschussprozedur wird zunächst bei geschlossener Beschleunigungsöffnung der hintere Druckraum durch Einbringen eines Druckgases unter Druck gesetzt. Sobald der jeweils erforderliche Gasdruck im Druckraum erreicht ist, wird die Beschleunigungsöffnung durch Betätigen der Verschlusseinrichtung freigegeben, wodurch das Druckgas in den Beschleunigungsraum expandiert, so dass der Kolben und der mit dem Kolben gekoppelte Träger beschleunigt werden. Um insbesondere bei nach unten geneigter Abschussvorrichtung ein unerwünschtes Herausgleiten des Trägers aus dem Zylinder im drucklosen Zustand, d.h. bei verschlossener Beschleunigungsöffnung, zu verhindern, ist eine grundsätzlich beliebig ausgebildete Halteeinrichtung vorgesehen, die den Kolben oder den Träger in der Ausgangsposition festhält. Die Halteeinrichtung wird entweder mit der Freigabe der Beschleunigungsöffnung ebenfalls zur Freigabe des Kolbens bzw. Trägers angesteuert oder ist derart ausgebildet, dass ihre Haltekräfte, insbesondere Magnetkräfte, durch den sich beschleunigenden Kolben bzw. Träger selbst überwunden werden. Als Halteeinrichtung für den Kolben bzw. Träger im drucklosen Zustand dient vorzugsweise eine als Magnethalter für den Prüfkörper vorgesehene Halterung, die somit eine Zusatzfunktion aufweist und hierfür derart ausgebildet ist, dass sie im drucklosen Zustand den Kolben bzw. Träger durch Magnetkräfte in der zurückgezogenen Ausgangsposition festhält.

Des weiteren wird vorgeschlagen, dass eine Blockiereinrichtung vorgesehen ist, die bei versuchtem Vorspannen des nicht arretierten Trägers bzw. Kolbens durch diesen beaufschlagbar ist. Die Blockiereinrichtung dient als eine Sicherung, die in einer Blockierstellung eine Bewegung des Trägers bzw. Kolbens in Abschussrichtung verhindert.

Dabei ist es bevorzugt, wenn die Blockiereinrichtung durch die Beaufschlagung in einem den Träger bzw. Kolben an einer Weiterbewegung hindernden Sicherungszustand verharrt. Vorzugsweise ist zumindest ein Blockierelement der Blockiereinrichtung durch die Beaufschlagung an einer bei arretiertem Träger bzw. Kolben möglichen Freigabebewegung insbesondere aufgrund von Reibungskräften gehindert.

Hierdurch wird in vorteilhafter Weise eine Selbstsicherung der Abschussvorrichtung geschaffen, indem der Träger bzw. Kolben selbst dafür sorgt, dass das Blockierelement ihn an einer Weiterbewegung in Abschussrichtung hindert.

Weitere bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnungen beschrieben. Es zeigen:
- Fig. 1: eine teilgeschnittene Seitenansicht einer Abschussvorrichtung gemäß einer Ausführungsform der Erfindung,
- Fig. 2: die Abschussvorrichtung von Fig. 1 in einer um 90° um die Längsachse gedrehten Ansicht,
- Fig. 3: die Anbringung einer erfindungsgemäßen Abschusseinrichtung an einem Tragarm einer Prüfvorrichtung,
- Fig. 4: die Anordnung von Fig. 3 in einer Schnittebene senkrecht zur Längsachse der Abschussvorrichtung, und
- Fig. 5: einen Ausschnitt von Fig. 1 in einer vergrößerten Darstellung.

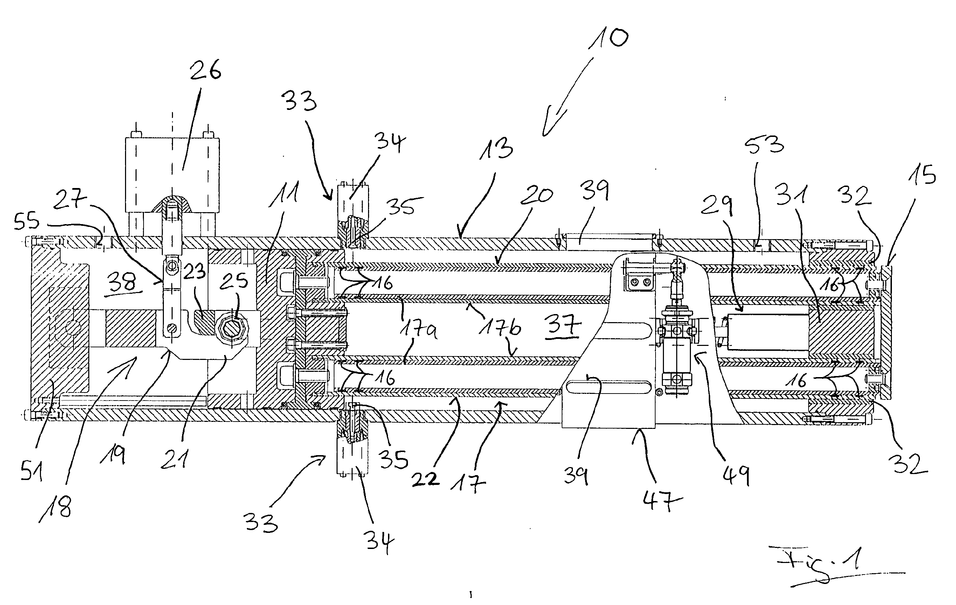

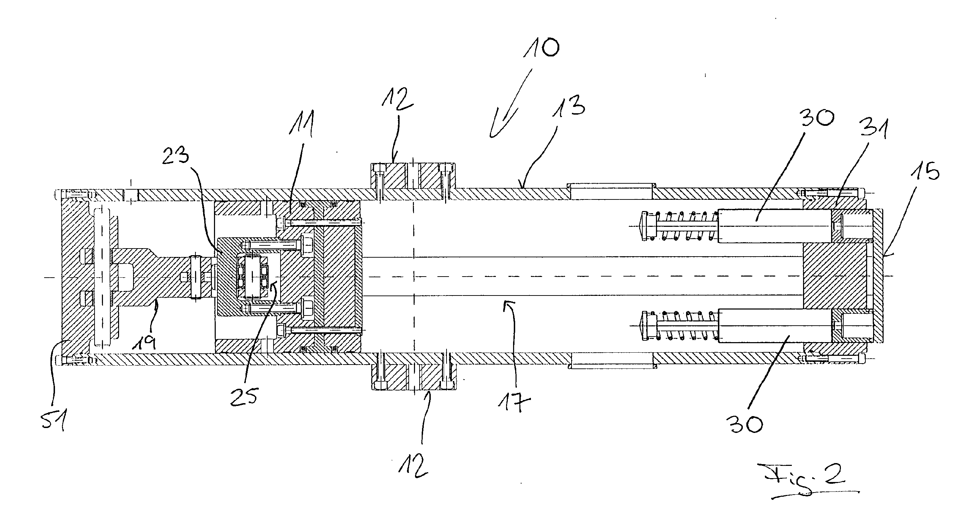

Die in Fig. 1 und Fig. 2 dargestellte Abschussvorrichtung 10 umfasst eine Kolben-/Zylinderanordnung mit einem Zylinder 13, in dem ein Kolben 11 axial bewegbar geführt ist. Über einen nachstehend näher beschriebenen Träger 17 ist eine als Aufnahmeplatte ausgebildete Halterung 15 mit dem Kolben 11 gekoppelt. An der Halterung 15 können verschiedene, nicht dargestellte Prüfkörper entweder direkt oder über eine beispielsweise schalenförmige Aufnahmeeinrichtung befestigt werden. Insbesondere für Freiflugprüfungen eingesetzte Prüfkörper können an der Halterung 15 durch Magnetkräfte gehalten werden.

Der Träger 17 umfasst zwei baugleiche Einheiten 20, 22 jeweils aus teleskopartig ineinander gesteckten Tragrohren 17a, 17b. Die beiden Teleskopeinheiten 20, 22 sind diametral einander gegenüberliegend angeordnet. Ein äußeres Tragrohr 17b ist jeweils an der Vorderseite des Kolbens 11 befestigt und am vorderen Ende des Zylinders 11 in einer Lagerhülse 32 eines Führungskörpers 31 geführt. Mittels des als Verschlussdeckel ausgebildeten und mit der Stirnseite des Zylinders 11 verschraubten Führungskörpers 31 ist das Abschussende des Zylinders 11 verschlossen.

In den Außen- oder Führungsrohren 17b ist jeweils ein inneres Tragrohr 17a gleitend geführt. Gleitringe 16, die in den hinteren Endbereich der Innenrohre 17a und in die vorderen Endbereiche der Außenrohre 17b eingepasst sind, bilden jeweils eine Gleitlagerung zwischen den Rohren 17a, 17b. An den vorderen Enden der Innenrohre 17a ist die Halterung 15 befestigt.

Durch diese mehrachsige Koppelung der Halterung 15 an den Kolben 11 über die beiden radial beabstandeten Einzelträger 20, 22 ist die Halterung 15 gegenüber dem Kolben 11 unverdrehbar gehalten. Der Träger 17 dient somit als eine Verdrehsicherung für die Halterung 15 und für einen an der Halterung 15 angebrachten Prüfkörper.

In einem Führungsmodus des Trägers 17 sind die Innenrohre 17a relativ zu den Außenrohren 17b in axialer Richtung frei beweglich und können somit aus- und eingefahren werden.

Zum Umschalten der Abschussvorrichtung 10 bzw. des Trägers 17 in einen Freiflugmodus können die Rohre 17a, 17b jeweils in einer beliebigen Relativ- oder Teleskopstellung und insbesondere in der in Fig. 1 und Fig. 2 dargestellten, vollständig eingefahrenen Stellung derart aneinander fixiert werden, dass der Träger 17 eine in axialer Richtung starre Verbindung mit konstanter Länge zwischen dem Kolben 11 und der Halterung 15 bildet. Ein Ausfahren der Innenrohre 17a ist im Freiflugmodus somit nicht möglich.

Zur Relativfixierung der Rohre 17a, 17b dient eine Sicherungseinrichtung, die in einer bevorzugten praktischen Ausführungsform der Erfindung jeweils von einem Sicherungsring am vorderen Ende des äußeren Führungsrohres 17b gebildet wird und im Freiflugmodus derart mit dem Innenrohr 17a zusammenwirkt, dass das Innenrohr 17a nicht ausgefahren werden kann.

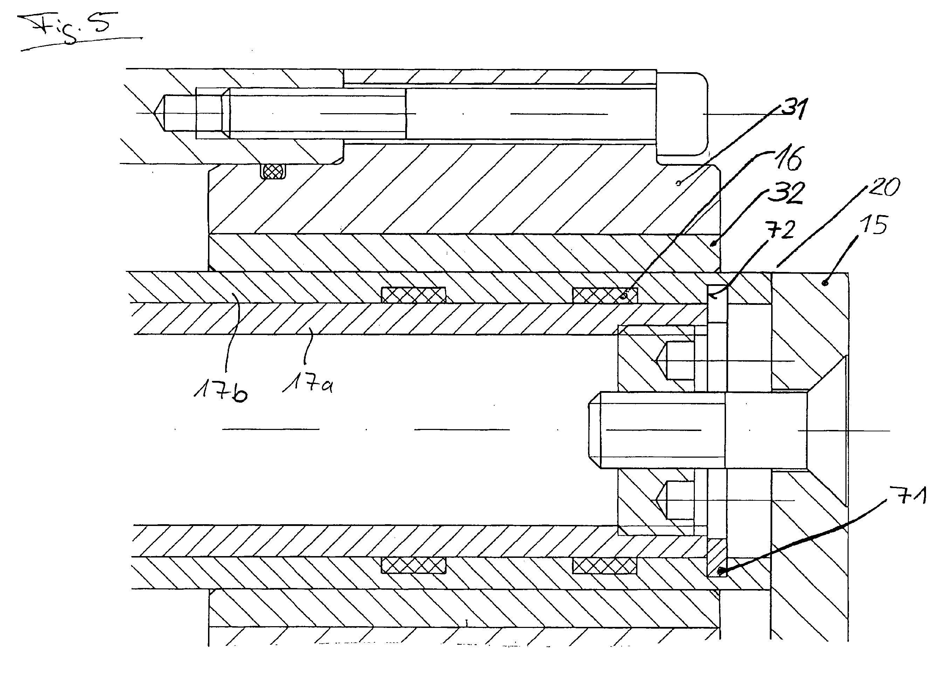

Fig. 5 zeigt die Relativfixierung der Rohre 17a, 17b mittels eines Sicherungsringes 71. Für die Sicherungsringe 71 ist in den äußeren Führungsrohren 17b jeweils eine Aussparung 72 vorgesehen, in die der Sicherungsring 71 eingesetzt werden kann, um den Freiflugmodus herzustellen, in dem ein Ausfahren der inneren Führungsrohre 17a durch die Sicherungsringe 71 blockiert ist.

Innen am vom Führungskörper 31 gebildeten, mit dem Zylinder 13 verschraubten Verschlussdeckel stützt sich eine Dämpfungseinheit 29 für den Kolben 11 ab, die nachstehend anhand von Fig. 2 näher erläutert wird.

Ein hinterer Druckraum 38 des Zylinders 13 ist von der Rückseite des Kolbens 11 und einem hinteren Verschlussdeckel oder Verschlussflansch 51 begrenzt, der auf die hintere Stirnseite des Zylinders 13 aufgeschraubt ist. In den Druckraum 38 ist zum Vorspannen des Kolbens 11 über eine im Zylinder 13 ausgebildete Einlassöffnung 55 ein Druckgas, vorzugsweise Stickstoff, einbringbar.

Eine Arretierung 18 für den Kolben 11 und somit für den Träger 17 umfasst einen am hinteren Verschlussdeckel 51 schwenkbar gelagerten Haltearm 19, der ein klauenartiges Eingriffsende 21 aufweist, das einen als Wälzlager ausgebildeten Abroller 25 umfasst, mit dem ein Verriegelungsabschnitt 23 des Kolbens 11 bei in der dargestellten Verriegelungsstellung befindlichem Haltearm 19 verriegelnd hintergriffen wird.

Eine Betätigungseinrichtung 26 mit einem pneumatischen Entriegelungszylinder zum Verschwenken des Hebelarms 19 ist außen am Zylinder 13 angebracht und über einen als Koppelgestänge ausgebildeten Betätigungsarm 27 mit dem Haltearm 19 verbunden.

Eine Blockiereinrichtung 33 mit zwei diametral einander gegenüberliegend von außen an den Zylinder 13 angesetzten Sicherungszylindern 34 dient zur Sicherung des Kolbens 11 im Fall einer Störung.

Mit den Sicherungszylindern 34 sind als Blockierelemente 35 dienende Schubstangen in den Zylinder 13 hinein und vor den Kolben 11 bewegbar, wie es in Fig. 1 am Beispiel des unteren Sicherungszylinders 34 dargestellt ist. Bei ordnungsgemäß arretiertem Kolben 11 gemäß Fig. 1 und Fig. 2 sind die Blockierelemente 35 nicht durch den Kolben 11 beaufschlagt, sondern es ist ein axialer Zwischenraum zwischen dem Kolben 11 und den Blockierelementen 35 vorhanden. Auf die Funktionsweise der Blockier- oder Sicherungseinrichtung 33 wird nachstehend näher eingegangen.

Ein vom Führungskörper 31 und von der Vorderseite des Kolbens 11 begrenzter vorderer Druckraum 37 des Zylinders 13 kommuniziert bei in einer Freigabestellung befindlichem Verschlusselement 47 mit der Umgebung über mehrere in Umfangrichtung verteilt angeordnete Auslassöffnungen 39 im Zylinder 13. Im ringförmigen Verschlusselement 47 sind Aussparungen 40 ausgebildet, die in der Freigabestellung mit den Auslassöffnungen 39 ausgerichtet sind. Durch Verdrehen des Verschlussringes 47 können die Auslassöffnungen 39 verschlossen werden. Mittels einer pneumatische Betätigungseinheit 49 ist der auf dem Zylinder 13 drehbar gelagerte Verschlussring 47 gegenüber dem Zylinder 13 verdrehbar.

Über eine Einlassöffnung 53 im Zylinder 13 ist in den vorderen Druckraum 37 ein Druckgas, bevorzugt Stickstoff, einbringbar, um zur Rückführung des Kolbens 11 in die in Fig. 1 und Fig. 2 dargestellte Ausgangsstellung den Druckraum 37 unter Druck zu setzen.

Aus Fig. 2 geht insbesondere die Ausgestaltung des Haltearms 19 hervor, der am Verschlussdeckel 51 schwenkbar gelagert ist und mit dem als Abroller 25 ausgebildeten Eingriffsende den als Verriegelungsbrücke ausgebildeten Verriegelungsabschnitt 23 des Kolbens 11 verriegelnd hintergreift.

Fig. 2 zeigt außerdem zwei die Dämpfungseinheit 29 bildende, selbsteinstellende Hydraulikdämpfer 30 zum Abbremsen des Kolbens 11, die sich am vorderen Verschlussdeckel 31 abstützen.

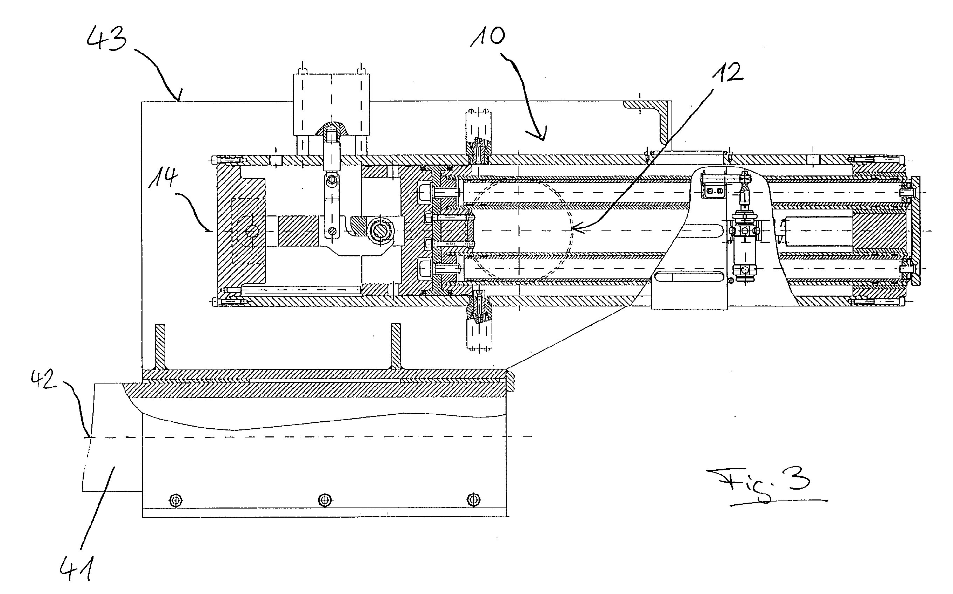

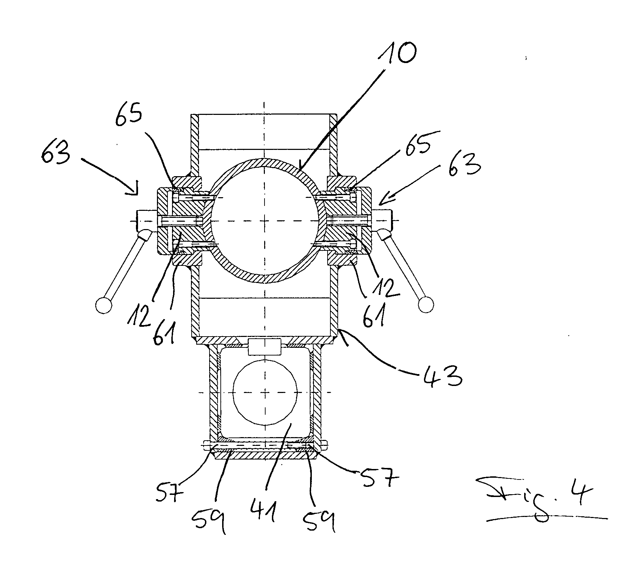

Außerdem sind in Fig. 2 zwei Halteabschnitte 12 dargestellt, die an diametral einander gegenüberliegenden Positionen von außen auf den Zylinder 13 geschraubt sind. Die scheibenförmigen und mit ihrer dem Zylinder 13 zugewandten Seite an dessen Form angepassten Halteabschnitte 12 dienen zur Klemmfixierung der Abschussvorrichtung 10 an einer Aufnahmevorrichtung bzw. einem Adapter. Hierauf wird nachstehend in Verbindung mit Fig. 3 und Fig. 4 näher eingegangen.

In Fig. 2 ist ferner der die Halterung 15 mit dem Kolben 11 koppelnde Träger 17 dargestellt.

Fig. 3 und Fig. 4 zeigen die Anbringung der erfindungsgemäßen Abschussvorrichtung 10 an einem Tragarm 41 einer nicht dargestellten Prüfvorrichtung. Hinsichtlich Aufbau und Funktionsweise der Prüfvorrichtung wird auf die unveröffentlichte deutsche Patentanmeldung 10029045 mit dem Anmeldetag 13. Juni 2000 verwiesen.

Zur Befestigung der Abschussvorrichtung 10 am Tragarm 41 dient eine als Klemmaufnahme sowohl für den Tragarm 41 als auch für die Abschussvorrichtung 10 dienende Aufnahmevorrichtung 43, die auch als Adapter bezeichnet werden kann. Der Adapter 43 ist mit einem ersten Abschnitt auf den Tragarm 41 steckbar und dort fixierbar und weist einen zweiten Abschnitt auf, in den die Abschussvorrichtung 10 eingesetzt und dort festgeklemmt werden kann.

Wie Fig. 3 zeigt, verlaufen bei am Tragarm 41 befestigter Abschussvorrichtung 10 die Längsachse 42 des Tragarms 41 und die Längsachse 14 der Abschussvorrichtung 10 parallel versetzt zueinander.

Ein Halteabschnitt 12 des Zylinders 13 ist in Fig. 3 durch gestrichelte Linien angedeutet.

Fig. 4 zeigt die Klemmfixierung einerseits des Adapters 43 am Tragarm 41 und andererseits der Abschussvorrichtung 10 am Adapter 43.

Mit Hilfe von über Schraubverbindungen 57 betätigbaren Klemmkeilen 59 kann der Adapter 43 mit seinem unteren Abschnitt auf dem Tragarm 41 festgeklemmt werden.

Die Halteabschnitte 12 der Abschussvorrichtung 10 sind in mit dem oberen Abschnitt des Adapters 43 verbundene Aufnahmen 61 eingesetzt. Mittels handbetätigbarer Spanneinrichtungen 63, die mit Klemmkeilen 65 zusammenwirken, können die Halteabschnitte 12 mit den Aufnahmen 61 verspannt werden, wodurch die Abschussvorrichtung 10 am Adapter 43 klemmfixiert wird.

Die Funktionsweise der erfindungsgemäßen Abschussvorrichtung 10 ist wie folgt:

Nach dem Fixieren der Abschussvorrichtung 10 mittels des Adapters 43 am Tragarm 41 der Prüfvorrichtung, dem Anbringen des jeweils benötigten Prüfkörpers an der Halterung 15 und dem Einstellen des betreffenden Betriebsmodus entweder durch Lösen (Führungsmodus) oder Herstellen (Freiflugmodus) der axial festen Verbindung zwischen den Innenrohren 17a und den Außenrohren 17b des Trägers 17 z.B. mittels der erwähnten Sicherungsringe 71 wird zunächst der Kolben 11 vorgespannt, indem der hintere Druckraum 38 durch Beaufschlagen mit Druckgas über die Einlassöffnung 55 unter Druck gesetzt wird.

Bei ordnungsgemäßer Arretierung des Kolbens 11 durch den Haltearm 19 bewegt sich der Kolben 11 während des Vorspannens nicht. Die während des Vorspannens in den Zylinder 13 hinein ausgefahrenen Blockierelemente 35 sind folglich durch den Kolben 11 nicht beaufschlagt.

Bevor mittels der Betätigungseinrichtung 26 der Haltearm 19 außer Eingriff mit dem Kolben 11 geschwenkt wird, um die Arretierung 18 zu lösen, wird mittels der Betätigungseinheit 49 der Verschlussring 47 in die Freigabestellung gedreht, in der die Aussparungen 39 des Verschlussrings 47 in Deckung mit den Auslassöffnungen 39 im Zylinder 13 gebracht sind.

Beim Verschwenken des Haltearmes 19 kommt es zu einer leichtgängigen Abrollbewegung des Wälzlagers 25 an der Verriegelungsbrücke 23 des Kolbens 11. Ist der Kolben 11 während des Vorspannens nicht ordnungsgemäß arretiert, so führt der zunehmende Gasdruck im hinteren Druckraum 38 zu einer axialen Bewegung des Kolbens 11, der dadurch gegen die während des Vorspannens in das Innere des Zylinders 13 hinein vorstehenden Blockierelemente 35 gedrückt wird.

Wenn gemäß der vorbestimmten Abschussprozedur die Blockiereinrichtung 33 bzw. die Sicherungszylinder 34 angesteuert werden, um zur Freigabe des Weges für den Kolben 11 und damit zur Aufhebung des Sicherungszustandes die Blockierelemente 35 einzufahren, dann wirken die Reibungskräfte zwischen dem Kolben 11 und den Blockierelementen 35 der Rückstellkraft der Sicherungszylinder 34 entgegen. Die Sicherungszylinder 34 sind derart ausgebildet, dass die Rückstellkraft nicht ausreicht, um die durch den Kolben 11 beaufschlagten Blockierelemente 35 einzufahren. Dieser Zustand wird mittels Näherungsschalter an den Sicherungszylindern 34 erkannt und führt zu einer automatischen Abschaltung der Gesamtvorrichtung und insbesondere zu einem Abbruch des Vorspannvorgangs. Wenn dagegen während des Vorspannens bei ordnungsgemäß arretiertem Kolben 11 die Blockierelemente 35 eingefahren werden können, dann wird nach dem Lösen der Arretierung 18 der aufgrund des Gasdrucks im Druckraum 38 vorgespannte Kolben 11 schlagartig in Richtung des vorderen Verschlussdeckels 31 beschleunigt.

Sobald im Freiflugmodus bei fixierten Innenrohren 17a die zu Beginn maximale Stoßgeschwindigkeit des Kolbens 11 abnimmt, fliegt der Prüfkörper aufgrund seiner Trägheit alleine weiter. Die zur Fixierung des Prüfkörpers an der Halterung 15 dienenden Haltekräfte, insbesondere Magnethaltekräfte, werden dabei überwunden.

Im Führungsmodus dagegen sind die Innenrohre 17a in den Außenrohren 17b axial frei bewegbar geführt. Nach dem spätestens bei seinem Aufprall auf die Dämpfer 30 erfolgenden Abbremsen des Kolbens 11 bewegt sich die Halterung 15 unter Verlängerung des Trägers 17 durch Ausfahren der Innenrohre 17a aus den Außenrohren 17b weiter. Aufgrund des als Verdrehsicherung wirkenden Trägers 17 kommt es dabei zu keinen Rotationsbewegungen der Halterung 15 und des an dieser befestigten Prüfkörpers.

Der Prüfkörper prallt somit in durch die Innenrohre 17a und die Halterung 15 definiert geführter Weise am zu prüfenden Gegenstand auf und kann wegen der leichtgängigen Gleitlagerung der axial frei beweglichen Innenrohre 17a in einer realen Unfallbedingungen nahekommenden Weise abprallen.

Zur Rückführung des Kolbens 11 in die Ausgangsstellung gemäß Fig. 1 und Fig. 2 wird zunächst mittels der Betätigungseinheit 49 der Verschlussring 47 verdreht, um die Auslassöffnungen 39 im Zylinder 13 zu schließen. Anschließend wird der vordere Druckraum 37 über die Einlassöffnung 53 mit Druckgas beaufschlagt, wodurch der Kolben 11 zurückgeschoben wird. Mittels der Betätigungseinheit 26 wird dann der in der Ausgangsstellung befindliche Kolben 11 durch Verschwenken des Haltearms 19 wieder arretiert.

Beim Zurückschieben des Kolbens 11 werden die am Kolben 11 befestigten Außenrohre 17b mitgenommen. Befand sich der Träger 17 beim zuvor erfolgten Abschuss im Freiflugmodus, so werden dabei auch die an den Außenrohren 17b fixierten Innenrohre 17a mitgenommen. Anderenfalls können die durch den zuvor erfolgten Abschuss im Führungsmodus ausgefahrenen Innenrohre 17a einfach von Hand eingeschoben werden, um den Ausgangszustand wiederherzustellen.

### Bezugszeichenliste

- 10: Abschussvorrichtung
- 11: Kolben
- 12: Halteabschnitt
- 13: Zylinder
- 14: Längsachse des Zylinders
- 15: Halterung
- 16: Gleitring
- 17: Träger
- 17a: Teilträger, inneres Tragrohr
- 17b: Teilträger, äußeres Tragrohr
- 18: Arretierung
- 19: Haltearm
- 20: Einzelträger
- 21: Eingriffsende
- 22: Einzelträger
- 23: Verriegelungsabschnitt
- 25: Abroller
- 26: Betätigungseinrichtung
- 27: Betätigungsarm
- 29: Dämpfungseinheit
- 30: Dämpfer
- 31: Führungskörper
- 32: Lagerhülse
- 33: Blockiereinrichtung
- 34: Sicherungszylinder
- 35: Blockierelement
- 37: vorderer Druckraum
- 38: hinterer Druckraum
- 39: Auslassöffnung
- 40: Aussparung
- 41: Tragarm
- 42: Längsachse des Tragarms
- 43: Adapter
- 47: Verschlusselement
- 49: Betätigungseinheit
- 51: Verschlussdeckel
- 53: Einlassöffnung
- 55: Einlassöffnung
- 57: Schraubverbindung
- 59: Klemmkeile
- 61: Aufnahme
- 63: Spanneinrichtung
- 65: Klemmkeile
- 71: Sicherungsring
- 72: Aussparung

## Patentansprüche

1. Abschussvorrichtung zum Beschleunigen eines Prüfkörpers in Richtung eines zu prüfenden Gegenstandes, insbesondere zum Prüfen von Fahrzeugen, mit einer Halterung (15) für den Prüfkörper und einem beschleunigbaren Träger (17) für die Halterung (15), wobei der Träger (17) wahlweise entweder in einem Freiflugmodus oder in einem Führungsmodus betreibbar ist, und wobei zumindest ein die Halterung (15) tragender Teil (17a) des beschleunigten Trägers (17) im Führungsmodus bis zum Aufprall des Prüfkörpers am Gegenstand bewegbar und im Freiflugmodus vor dem Aufprall abbremsbar ist.

2. Abschussvorrichtung nach Anspruch 1,
**dadurch gekennzeichnet,**
**dass** nach dem Abbremsen zumindest eines Teils (17b) des zuvor beschleunigten Trägers (17) dessen die Halterung (15) tragender Teil (17a) im Führungsmodus trägheitsbedingt weiter bewegbar und im Freiflugmodus lediglich in einem gegenüber dem Führungsmodus zumindest reduzierten Ausmaß weiter bewegbar und vorzugsweise am abgebremsten Teil (17b) festgehalten ist.

3. Abschussvorrichtung nach Anspruch 1 oder 2,
**dadurch gekennzeichnet,**
**dass** im Führungsmodus die Halterung (15) trägheitsbedingt unter Verlängerung des Trägers (17) weiter bewegbar und im Freiflugmodus der Träger (17) lediglich in einem gegenüber dem Führungsmodus zumindest reduzierten Ausmaß verlängerbar und vorzugsweise zumindest im wesentlichen unverlängerbar ist.

4. Abschussvorrichtung nach einem der vorhergehenden Ansprüche,
**dadurch gekennzeichnet,**
**dass** zumindest ein die Halterung (15) tragender Teil (17a) des Trägers (17) spätestens zum Zeitpunkt des Aufpralls des Prüfkörpers am Gegenstand zumindest in Abschussrichtung frei beweglich geführt ist.

5. Abschussvorrichtung nach einem der vorhergehenden Ansprüche,
**dadurch gekennzeichnet,**
**dass** der Träger (17) mit einem Kolben (11) einer Kolben-/Zylinderanordnung gekoppelt ist, wobei der Kolben (11) in einem Zylinder (13) beweglich geführt und insbesondere mittels Gasdruck beschleunigbar ist.

6. Abschussvorrichtung nach einem der vorhergehenden Ansprüche,
**dadurch gekennzeichnet,**
**dass** der Träger (17) mehrteilig ausgebildet ist und zumindest in Abschussrichtung relativ zueinander bewegbare Teilträger (17a, 17b) umfasst.

7. Abschussvorrichtung nach einem der vorhergehenden Ansprüche,
**dadurch gekennzeichnet,**
**dass** der Träger (17) als Traggestänge (17a, 17b) ausgebildet ist.

8. Abschussvorrichtung nach einem der vorhergehenden Ansprüche,
**dadurch gekennzeichnet,**
**dass** der Träger (17) teleskopartig gekoppelte Teilträger (17a, 17b) umfasst.

9. Abschussvorrichtung nach einem der vorhergehenden Ansprüche,
**dadurch gekennzeichnet,**
**dass** der Träger (17) ineinander gesteckte Tragrohre (17a, 17b) umfasst.

10. Abschussvorrichtung nach einem der vorhergehenden Ansprüche,
**dadurch gekennzeichnet,**
**dass** der Träger (17) als Verdrehsicherung für die Halterung (15) ausgebildet ist.

11. Abschussvorrichtung nach einem der vorhergehenden Ansprüche,
**dadurch gekennzeichnet,**
**dass** die Halterung (15) mit wenigstens zwei beabstandeten und insbesondere diametral einander gegenüberliegenden Einzelträgern (20, 22) des Trägers (17) gekoppelt ist.

12. Abschussvorrichtung nach einem der vorhergehenden Ansprüche,
**dadurch gekennzeichnet,**
**dass** zum Umschalten zwischen dem Führungsmodus und dem Freiflugmodus eine Relativbewegbarkeit von vorzugsweise als ineinander gesteckte Tragrohre ausgebildeten Teilträgern (17a, 17b) entweder blockierbar oder freigebbar ist, insbesondere mittels wenigstens eines Sicherungsringes (71).

13. Abschussvorrichtung nach einem der vorhergehenden Ansprüche,
**dadurch gekennzeichnet,**
**dass** eine Arretierung zum Halten des insbesondere vorgespannten Trägers (17), insbesondere eines mit dem Träger (17) gekoppelten Kolbens (11), wenigstens einen verschwenkbaren Haltearm (19) umfasst, der in einer Verriegelungsstellung mit einem klauenartigen Eingriffsende (21) einen Verriegelungsabschnitt (23) des Trägers (17) bzw. Kolbens (11) umgreift.

14. Abschussvorrichtung nach Anspruch 13,
**dadurch gekennzeichnet,**
**dass** das Eingriffsende (21) des Haltearms (19) einen insbesondere als Wälzlager ausgebildeten Abroller (25) umfasst.

15. Abschussvorrichtung nach Anspruch 13 oder 14,
**dadurch gekennzeichnet,**
**dass** der Haltearm (19) mittels eines aus einem Zylinder (13), in dem der Kolben (11) beweglich geführt ist, insbesondere in etwa radialer Richtung herausführenden Betätigungsarms (27) verschwenkbar ist.

16. Abschussvorrichtung nach einem der vorhergehenden Ansprüche,
**dadurch gekennzeichnet,**
**dass** zum Abbremsen des Trägers (17), insbesondere eines mit dem Träger (17) gekoppelten Kolbens (11), eine insbesondere hydraulische Dämpfungseinheit (29) vorgesehen ist, die an einem ein Abschussende eines Zylinders (13) insbesondere deckelartig verschließenden Führungskörper (31) für den Träger (17) abgestützt ist.

17. Abschussvorrichtung nach einem der vorhergehenden Ansprüche,
**dadurch gekennzeichnet,**
**dass** eine Blockiereinrichtung (33) vorgesehen ist, die bei versuchtem Vorspannen des nicht arretierten Trägers (17), insbesondere eines mit dem Träger (17) gekoppelten Kolbens (11), durch diesen beaufschlagbar ist.

18. Abschussvorrichtung nach Anspruch 17,
**dadurch gekennzeichnet,**
**dass** die Blockiereinrichtung (33) durch die Beaufschlagung in einem den Träger (17) bzw. Kolben (11) an einer Weiterbewegung hindernden Sicherungszustand verharrt.

19. Abschussvorrichtung nach Anspruch 17 oder 18,
**dadurch gekennzeichnet,**
**dass** zumindest ein Blockierelement (35) der Blockiereinrichtung (33) durch die Beaufschlagung an einer bei arretiertem Träger (17) bzw. Kolben (11) möglichen Freigabebewegung insbesondere aufgrund von Reibungskräften gehindert ist.

20. Abschussvorrichtung nach einem der vorhergehenden Ansprüche,
**dadurch gekennzeichnet,**
**dass** in einem Zylinder (13), in dem ein Kolben (11) beweglich geführt ist, wenigstens eine Auslassöffnung (39) ausgebildet ist, über die aus einem von einer Vorderseite des mit dem Träger (17) gekoppelten Kolbens (11) begrenzten vorderen Druckraum (37) des Zylinders (13) Gas entweichen kann und die zum Zurückführen des Kolbens (11) in eine Ausgangsstellung verschließbar ist.

21. Abschussvorrichtung nach Anspruch 20,
**dadurch gekennzeichnet,**
**dass** ein den Zylinder (13) zumindest bereichsweise umgebendes, insbesondere ring- oder hülsenförmiges Verschlusselement (47) vorgesehen ist, das zum Freigeben und Verschließen der Auslassöffnung (39) gegenüber dem Zylinder (13) verdrehbar ist, wobei vorzugsweise das Verschlusselement (47) ausgehend von einer Schließstellung in zeitlicher Abstimmung mit der Abschussvorbereitung insbesondere automatisch mittels einer bevorzugt pneumatischen und/oder hydraulischen Betätigungseinheit (49) in eine Freigabestellung drehbar ist.

22. Abschussvorrichtung nach einem der vorhergehenden Ansprüche,
**dadurch gekennzeichnet,**
**dass** in einen vorderen Druckraum (37) eines Zylinders (13) zum Zurückführen eines mit dem Träger (17) gekoppelten, im Zylinder (13) beweglich geführten Kolbens (11) ein Druckgas einbringbar ist.

23. Abschussvorrichtung nach einem der vorhergehenden Ansprüche,
**dadurch gekennzeichnet,**
**dass** sie auswechselbar mit einem Tragarm (41) einer Prüfvorrichtung koppelbar ist, vorzugsweise mittels eines am Tragarm (41) befestigbaren Adapters (43), an dem sie mit ihrer in Abschussrichtung verlaufenden Längsachse (14) parallel versetzt zur Längsachse (42) des Tragarms (41) bevorzugt mittels einer Klemmeinrichtung (61, 63, 65) fixierbar ist.
